# EUROPÄISCHE PATENTSCHRIFT

(11) **EP 1 198 330 B1**
(45) Veröffentlichungstag und Bekanntmachung des Hinweises auf die Patenterteilung: **18.02.2004**
(21) Anmeldenummer: 00938693.9
(22) Anmeldetag: 27.05.2000
(51) Int. Cl.: B27N 3/28

(54) **STRANGPRESSE FÜR PFLANZLICHE KLEINTEILE**
EXTRUDER FOR PLANT FRAGMENTS
EXTRUDEUSE DE FRAGMENTS VEGETAUX

(30) Priorität: 22.07.1999 DE 29912822 U
(43) Veröffentlichungstag der Anmeldung: 24.04.2002
(73) Patentinhaber: Anton Heggenstaller AG, D-86556 Unterbernbach (DE)
(72) Erfinder: SPIES, Xaver, D-86556 Unterbernbach (DE)
(74) Vertreter: Ernicke, Hans-Dieter, Dipl.-Ing.
(86) Internationale Anmeldenummer: PCT/EP2000/004852
(87) Internationale Veröffentlichungsnummer: WO 2001/007221

(56) Entgegenhaltungen:
- EP-A- 0 376 175
- EP-A- 0 811 471
- WO-A-95/04645
- DE-A- 3 205 866
- DE-A- 3 222 113
- DATABASE WPI Section PQ, Week 199408 Derwent Publications Ltd., London, GB; Class P63, AN 1994-064195 XP002146929 & SU 1 791 117 A (WOOD PROCESSING IND RES INST), 30. Januar 1993 (1993-01-30)

## Beschreibung

Die Erfindung bezieht sich auf ein Verfahren und auf Vorrichtungen zum Strangpressen von mit Bindemitteln vermengten pflanzlichen Kleinteilen, insbesondere aus Holz, entsprechend dem Oberbegriff der Patentansprüche 1 und 2.

Bei den üblichen Kolbenstrangpressen wird ein Aushärtekanal vorgesehen, der von einem Wärmeträgermedium durchflossen wird. Durch die Reibung an den Innenwänden des Aushärtekanals wird eine Bremswirkung auf den Strang ausgeübt. Wenn der Aushärtekanal beziehungsweise Teilbereiche davon quer zur Strangpressrichtung gemäß der DE-A-25 35 989 verstellbare Metallwände aufweist, kann die Bremswirkung während des Presshubes der Kolbenstrangpresse reduziert und bei der Rückwärtsbewegung des Kolbens verstärkt werden. Dies hat zur Folge, dass die verleimten Späne relativ zueinander zur Ruhe kommen und die Klammerwirkung des Bindemittels nicht gestört wird. Eine Pressverformung auf den Strang ist damit jedoch nicht verbunden.

Bei großen Strangquerschnitten erfolgt eine zusätzliche Erwärmung durch ein zentrisch im Strangquerschnitt geführtes, elektrisch beheiztes Rohr. Der durch dieses Rohr bedingte, längs der Strangachse verlaufende Kanal hat sich jedoch als hinderlich erwiesen,weil bei Reparaturen der Paletten häufig die Nägel nicht korrekt positioniert werden sondern in das Loch eindringen. Die Vernagelung dieser Palettenklötze mit Palettenbrettern muss nämlich so erfolgen, dass ein Eindringen der Nägel in diesen Kanal vermieden wird.

Durch die EP 0 376 175 ist es bekannt, zwischen der Strangpresse und dem Aushärtekanal einen sogenannten Reaktor anzuordnen, der den verdichteten Strang starr umgreift und durch den Wasser, Wasserdampf oder zusätzliches flüssiges oder dampfförmiges Bindemittel auf die Oberfläche des Stranges aufgebracht werden kann.

Hierbei wird ausschließlich das Ziel verfolgt, die Oberfläche des Stranges zu verbessern. Voraussetzung für dieses vorbekannte Verfahren ist jedoch, dass die zu verpressenden Späne und Kleinteile eine wesentlich geringere Feuchtigkeit als üblich besitzen dürfen, um das Wasser oder den Wasserdampf direkt aufnehmen zu können.

Mit diesem bekannten Verfahren ist jedoch keine vollständige Durchwärmung des Stranges möglich.

Zur Beschleunigung des Aushärteprozesses lehrt die EP-0 811 471, in den Innenraum der Presse überhitzten Dampf einzuleiten. Dieser Innenraum wird von einem perforierten feststehenden Rohr innenseitig und von umlaufenden Pressbändern bzw. Pressplattenbändern außenseitig gebildet, zwischen denen die Holzspäne beim Strangpressen zu einem Rohr verdichtet werden. Die Einwirkung des Dampfes erfolgt daher auf die noch nicht abgebundenen Späne und soll offenbar den sonst üblichen, von außen beheizten Aushärtekanal ersetzen.

Schließlich ist es durch die DE 20 16 771 zur Herstellung von Holzspanplatten bekannt, im Bereich eines beheizten Aushärtekanals überhitzten Dampf auf den Strang und damit in das gepresste Material zu blasen, um die dann auftretende Feuchtigkeit mittels Einblasens von Pressluft wieder aus dem Strang abzuleiten. Auf diese Weise kann jedoch das Entweichen des Dampfes längs der Mantelfläche des Stranges nicht verhindert werden.

Der Erfindung liegt hingegen die Aufgabe zugrunde, eine wesentlich schnellere Durchwärmung des bereits verdichteten Stranges unter Reduzierung der Länge des Aushärtekanales zu erreichen.

Diese Aufgabe wird erfindungsgemäß dadurch gelöst, dass der Strang in einem Zustand, bei dem er bereits verdichtet und im Außenbereich schon ausgehärtet ist, partiell während des Strangstillstandes durch Verformungsdruck radial nachgeformt und im Pressbereich mit Dampf, insbesondere Sattdampf, oder Heizgas beaufschlagt wird.

Eine vorteilhafte Vorrichtung zur Durchführung des erfindungsgemäßen Verfahrens ergibt sich aus den Merkmalen des Patentanspruches 2.

Während beim Gegenstand der DE-A- 25 35 989 die beweglichen Wände des Aushärtekanals lediglich abgestützt werden, um ein Ausdehnen des Stranges zu verhindern, wird bei der Erfindung durch Pressbacken eine radiale Verformung des Stranges unter gleichzeitigem Aufbringen von Dampf der Heizgas bewirkt, um die Aushärtung des Stranges zeitlich zu verkürzen und demzufolge auch die Länge des Aushärtekanals zu verringern. Mit dem Verformungsdruck wird zugleich eine genaue Kalibrierung des Stranges herbeigeführt.

Es ist zwar durch die DE-32 22 113 C2 bekannt, im Rezipienten einer Strangpresse eine radiale Einpressung von durchlaufenden Sicken taktweise in den geformten, aber noch nicht erwärmten Strang vorzunehmen, um die Festigkeit des ausgehärteten Stranges zu steigern und dessen Biegesowie Scherfestigkeit besser berechnen zu können. Durch diese Maßnahme kann aber eine schnellere Durchwärmung des Stranges bzw. eine Reduzierung der Länge des Aushärtekanals nicht erreicht werden.

In einer Ausgestaltung der Erfindung, ist vorgesehen, dass eine Dampfzufuhrstation zum taktweisen Einbringen von Dampf, insbesondere Sattdampf oder heißen Gasen, mit der Pressstation zu einer baulichen Einheit zusammengefasst sind.

Beide Erfindungsmerkmale haben zum Ergebnis, dass die Aushärtezeit und die Aushärtelänge eines Stranges wesentlich reduziert werden können, wenn auf den bereits verdichteten Strang ein zentrischer Druck und vorzugsweise zusätzlich eine Dampfzufuhr aufgebracht werden. Bevorzugt bilden die Pressstation und die Dampfzufuhrstation im Sinne der Erfindung eine bauliche Einheit.

In den Unteransprüchen sind zahlreiche Ausführungsformen und Varianten der Erfindung dargestellt, deren Wirkungsweise sich aus der Zeichnung und der Beschreibung ergibt. Von Bedeutung ist hierbei, daß die Nachpressung des Stranges beim Stillstand des Strangvorschubes erfolgt. Ebenso geschieht die Dampfzufuhr während des Stillstandes des Stranges.

Im Anschluß an die erfindungsgemäße Preßstation befindet sich vorzugsweise eine konventionelle Nachhärtezone von kurzer Bauart, die zugleich als Bremseinheit zur Einstellung der Strangreibung und der Rohdichte des Stranges eingesetzt werden kann. Diese Bremseinheit verhindert ein unkontrolliertes Expandieren des Stranges in Längsrichtung, das beim Lüften der zentrischen Preßbacken auftritt und zu Rissen im Strang führen kann.

Die Länge der Preßbacken der Preßstation überdeckt einen oder mehrere Preßhübe und entspricht beispielsweise dem doppelten Hub des Strangpreßkolbens. Dadurch wird erreicht, daß eine Überdeckung mehrerer Stoßstellen des Stranges erfolgt, was zur Homogenisierung der Festigkeit des Stranges beiträgt.

Gegenstand der Erfindung ist ferner eine Steuerung, die es ermöglicht, daß die Preßbacken der Preßstation gelüftet sind, wenn der Strang durch den Strangpreßkolben voranbewegt wird.

Diese und weitere Merkmale der Erfindung sind in der Zeichnung schematisch und beispielsweise beschrieben. Es zeigen:
- Figur 1:: eine schematische Seitenansicht einer horizontalen Kolbenstrangpresse mit den verschiedenen Stationen und
- Figur 2:: einen Querschnitt durch eine Preßstation in vergrößerter Darstellung entlang der Linie II-II in Figur 1.

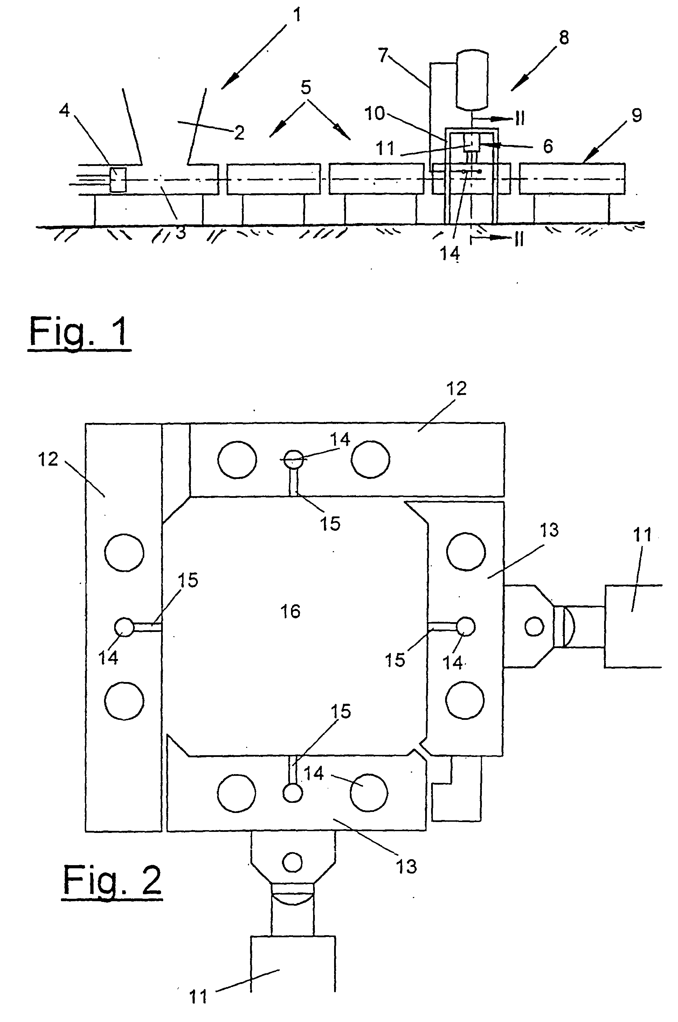

Im Beispiel der Figur 1 ist das Schema einer normalen Strangpresse (1) gezeigt. Ein Zuführschacht (2) führt das mit Bindemittel vermengte Kleinteilgemisch, insbesondere aus pflanzlichen Kleinteilen, in einen Füll- und Preßraum (3), der in nicht dargestellter Weise durch einen Schließschieber nach oben abgeschlossen werden kann. In der Strangpreßachse ist ein Strangpreßkolben (4) hin- und herbewegbar, der das in den Füll- und Preßraum (3) . eingeführte Kleinteilgemenge verdichtet und in einen Aushärtekanal (5) abschiebt, der in herkömmlicher Weise beheizt werden kann.

Im Bereiche dieses ersten Abschnittes eines Aushärtekanals (5) beginnt die Leimreaktion an der Außenfläche des gepreßten Stranges, wohingegen der innere Bereich des Stranges noch im gepressten, aber noch nicht reagierenden Zustand sich befindet.

Im Bereich des Aushärtekanals (5) ist eine Preßstation (6) vorgesehen, welche die Aufgabe hat, den in diesem Bereich befindlichen Strangabschnitt radial zur Strangpreßachse nachzuformen. Zu diesem Zweck ist ein stabiler Rahmen (10) erforderlich, der die Reaktionskraft der preßdruckerzeugenden Anordnungen aufnimmt.

Das Ziel dieser Nachformung besteht darin, den Strang, obwohl er bereits axial verdichtet ist, in radialer Richtung nachzuformen und gegen Dampfaustritt an den Preßbacken abzudichten. Hierbei wird vorzugsweise ein Verformungsweg in der Größenordnung von 0,5 mm bis 2 mm je Preßbacke angestrebt.

Eine solche Nachverformung hat den Vorteil, daß die Oberflächenqualität des Stranges verbessert und dessen mechanische Festigkeit erhöht wird.

Die Erfindung sieht aber zugleich vor, daß während der Nachverformung oder im Anschluß daran eine intensive Dampfzufuhr auf den Strang erfolgt. Im Beispiel der Figur 1 ist symbolisch mit (7) eine Dampfzufuhrstation dargestellt, mit der Dampf, insbesondere Sattdampf oder heißes Gas, durch Kanäle (14) herangeführt wird, welche den in der Preßstation (6) befindlichen Strangabschnitt umgreifen.

Im Beispiel der Figur 2 ist im vergrößerten Querschnitt dargestellt, wie starre Kanalwände (12) und bewegliche Kanalwände (13) den Strang (16) insgesamt umgreifen. In den Kanalwänden (12,13) befinden sich Kanäle (14) für die Dampfzufuhr, von denen aus radiale Einspritzkanäle (15) in Richtung zum Strang (16) ausgehen. Mit (11) sind Preßkolben bezeichnet, welche die beweglichen Kanalwände (13) gegen die starren Kanalwände (12) verschieben.

In einer Variante dieses Beispieles können auch alle Preßbacken (12,13) beweglich ausgebildet sein.

Die Nachverformung des Stranges (16) in der Preßstation (6) erfolgt, während sich der Strang (16) vorzugsweise in Ruhestellung befindet. Sobald der radiale Preßdruck durch die Preßkolben (11) aufgebaut ist, werden Dampfventile geöffnet, wodurch in den zwischen den Kanalwänden (12,13) eingeschlossenen Teil des Stranges (16) Dampf einströmt. Der Dampf kondensiert in der Span-Matrix und bewirkt eine plötzliche Temperaturerhöhung, die die Aushärtereaktion im Strangkern schlagartig in Gang setzt.

Vor Beginn.des nächsten Preßhubes des Strangpreßkolbens (4) werden die Preßbacken (12,13) gelüftet, so daß der Strang (16) ohne wesentliche Reibung durch die Preßstation (6) hindurch bewegt werden kann.

Die Erfindung sieht eine Steuerung vor, mit der eine wechselseitige Lüftung und Pressung beweglicher Kanalwände herbeigeführt wird. Wenn nämlich der Strang (16) in der Preßstation (6) der Nachpressung ausgesetzt wird, werden die beweglichen Preßbacken im Bereich des Aushärtekanales (5) gelüftet. Sobald aber der Strangpreßkolben (4) in Preßrichtung voranbewegt wird, erfolgt eine Entlüftung der Preßbacken (12,13) in der Preßstation (6), wohingegen die beweglichen Kanalwände im Aushärtekanal (5) gegen den Strang in einer vorher einstellbaren Weise angestellt werden. Auf diese Weise werden Risse in der Strangoberfläche während der Aushärtung vermieden.

Bevorzugt sind die Preßstation (6) und die Dampfzuführstation (7) in einer baulichen Einheit (8) zusammengefaßt, wie dies auch aus Figur 2 hervorgeht.

Im Anschluß an die Preßstation (6) befindet sich eine konventionelle Nachhärtezone (9), die auch als Bremseinheit ausgebildet sein kann. Diese Nachhärtezone (9) ist beheizt und weist anstellbare Kanalwände auf, durch welche die Reibung der Kanalwände am Strang (16) eingestellt werden kann. Dadurch ist die Nachhärtezone (9) auch als Bremseinheit verwendbar.

Die Länge der Kanalwände (12,13) gemäß Figur 2 entspricht vorzugsweise dem doppelten Preßhub des Strangpreßkolbens (4), wodurch eine Überdeckung mehrerer Stoßstellen verpresster Strangabschnitte erreicht wird.

Mit dem Gegenstand der Erfindung ist eine wesentliche Verkürzung der Baulänge vorbekannter Strangpressen und Aushärtevorrichtung möglich. Der in der Dampfzuführstation (7) zugeführte Dampf transportiert einen Großteil der insgesamt zur Aushärtung benötigten Wärmeenergie, insbesondere in der Größenordnung von 70% bis 90%.

Mit dem Gegenstand der Erfindung ist somit ein neues Verfahren ausführbar, mit dem ein vollständig in Strangpreßrichtung verdichteter Strang, der aber nur peripher teilausgehärtet ist, unter Druck mit Dampf beaufschlagt wird, der in einer so großen Menge zugeführt wird, daß ein plötzlicher Temperaturanstieg über den gesamten Strangquerschnitt entsteht. Zugleich wird der Strang im Bereich der Dampfzufuhr nachgeformt und erfährt somit eine radiale Einengung von ca. 0,5 mm bis 2 mm.

Der Vorteil dieser Maßnahme besteht u. a. darin, daß eine schnellere Reaktionsgeschwindigkeit und somit eine höhere Leistung der Strangpresse ermöglicht wird, wobei die Oberflächenqualität des Stranges verbessert und die Festigkeit des Stranges gesteigert wird. Von besonderer Bedeutung ist allerdings, daß eine wesentliche Verkürzung der Baulänge der Strangpresse mit dem Aushärtekanal erreicht werden kann, weil nur noch weniger als die Hälfte der Heizgänge, gemessen am Stand der Technik, benötigt werden.

### STÜCKLISTE

- 1: Strangpresse
- 2: Zuführschacht
- 3: Füll- und Preßraum
- 4: Strangpreßkolben
- 5: Aushärtekanal
- 6: Preßstation
- 7: Dampfzuführstation
- 8: bauliche Einheit
- 9: konventionelle Nachhärtezone = Bremseinheit
- 10: Rahmen
- 11: Preßkolben
- 12: starre Kanalwand (Preßbacke)
- 13: bewegliche Kanalwand (Preßbacke)
- 14: Kanal für die Dampfzufuhr
- 15: Einspritzkanal
- 16: Strang

## Patentansprüche

1. Verfahren zum Strangpressen von mit Bindemitteln vermengten pflanzlichen Kleinteilen, insbesondere aus Holz, in einer vornehmlich horizontal wirkenden Strangpresse, wobei das Kleinteilgemisch nachdem es im Pressraum (3) axial gepresst werden ist, durch einen beheizbaren Aushärtekanal (5)geführt wird, dessen bewegliche Kanalwände während des Stillstandes des Stranges druckveränderbar abgestützt sind, **dadurch gekennzeichnet, dass** der Strang in einem Zustand, bei dem er bereits verdichtet und im Außenbereich schon ausgehärtet ist, partiell während des Strangstillstandes durch Verformungsdruck radial nachgeformt und im Pressbereich mit Dampf, insbesondere Sattdampf, oder Heizgas beaufschlagt wird.

2. Strangpresse zur Durchführung des Verfahrens nach Anspruch 1, bestehend aus einem Zuführschacht (2) für das Kleinteilgemenge, einem sich anschließenden Füllbeziehungsweise Pressraum (3), einem vornehmlich horizontal wirkenden Strangpresskolben (4) und aus einem beheizbaren Aushärtekanal (5), durch den das im Füll- beziehungsweise Pressraum verdichtete Kleinteilgemisch zum Zwecke des Aushärtens geführt wird, dessen beweglichen Wände stellenweise abgestützt sind, **dadurch**
**gekennzeichnet, dass** im Bereich des Aushärtekanals (5) eine mit Pressbacken (12,13) versehene Pressstation (6) zum radialen Nachformen des Stranges (16) sowie eine Dampfzuführstation (7) zum taktweisen radialen Einbringen von Dampf, insbesondere Sattdampf, oder Heizgas angeordnet sind.

3. Strangpresse nach Anspruch 2 **dadurch gekennzeichnet, dass** die Dampfzuführstation mit der Pressstation (6) zu einer baulichen Einheit zusammengefasst sind.

4. Strangpresse nach Anspruch 3, **dadurch gekennzeichnet, dass** eine Folgesteuerung vorgesehen ist, mit der beim Stillstand des Strangvorschubes zunächst die Nachformung des Stranges (16) und danach die Dampfzufuhr in den Strang (16) geschaltet wird.

5. Strangpresse nach Anspruch 2 oder einem der folgenden, **dadurch gekennzeichnet, dass** im Anschluss an die Pressstation (6) eine konventionelle Nachhärtezone (9) von kurzer Bauart angeordnet ist.

6. Strangpresse nach Anspruch 2 oder einem der folgenden, **dadurch gekennzeichnet, dass** im Anschluss an die Pressstation (6) eine Bremseinheit zur Einstellung der Strangreibung und der Rohdichte des Stranges (16) angeordnet ist.

7. Strangpresse nach Anspruch 2 oder einem der folgenden, **dadurch gekennzeichnet, dass** der Verformungsdruck so gesteuert ist, dass eine allseitige zentrische Nachformung des Stranges (16) in der Größenordnung von 0,5 mm bis 2 mm gegeben ist.

8. Strangpresse nach Anspruch 2 oder einem der folgenden, **dadurch gekennzeichnet, dass** die in Strangpressrichtung sich erstreckende Länge der in der Pressstation (6) befindlichen Pressbacken (12,13) mindestens der doppelten Länge eines Presshubes des Stranges (16) entspricht.

9. Strangpresse nach Anspruch 2 oder einem der folgenden, **dadurch gekennzeichnet, dass** eine Wechselsteuerung zwischen den beweglichen Formwänden des Aushärtekanals (5) und den Pressbacken (12) der Pressstation (6) dergestalt vorgesehen ist, dass die Pressbacken (12) gelüftet sind, wenn die beweglichen Formwände auf den Strang (16) einwirken.

10. Strangpresse nach Anspruch 2 oder einem der folgenden, **dadurch gekennzeichnet, dass** die Pressbacken (12) beheizt und mit den Bohrungen (14,15) zur Dampfzufuhr versehen sind.

## Claims

1. Process for extruding vegetable particles, in particular of wood, mixed with binders in a primarily horizontally operating extruding press, whereby the particle mix, after it has been pressed axially in the pressing space (3), is passed through a heatable curing channel (5), the movable channel walls of which are held by pressure that can be changed while the product is stopped,
**characterized in that**
the product in a condition, in which it is already compregnated and already cured at the outside, is partially reshaped radially by deformation pressure while the product is stopped and in the pressing area is subjected to steam, in particular saturated steam, or hot gas.

2. Extruding press for executing the process according to Claim 1, consisting of a feed shaft (2) for the particle mix, a following filling or pressing space (3), a primarily horizontally operating extruding press plunger (4) and a heatable curing channel (5), through which the particle mix compregnated in the filling or pressing space is passed for curing, the movable walls of which are held in places, **characterized in that**
in the area of the heating channel (5) there is a pressing station (6) with cheek plates (12, 13) for radial reshaping of the product (16) and a steam feed station (7) for the cyclical introduction of steam, in particular saturated steam, or hot gas.

3. Extruding press according to Claim 2, **characterized in that**
the steam feed station is combined into one structural unit with the pressing station (6).

4. Extruding press according to Claim 3, **characterized in that**
there is an automatic sequence control system, with which on stopping of the advance of the product there is a switch to first reshaping of the product (16) and then the feed of steam into the product (16).

5. Extruding press according to Claim 2 or one of the following, **characterized in that**
a conventional aftercure zone (9) of short design is arranged following the pressing station (6).

6. Extruding press according to Claim 2 or one of the following, **characterized in that**
a braking unit for setting the product friction and the bulk density of the product (16) is arranged following the pressing station (6).

7. Extruding press according to Claim 2 or one of the following, **characterized in that**
the deformation pressure is controlled so that there is all-round centric reshaping of the product (16) in the order of magnitude of 0.5 mm to 2 mm.

8. Extruding press according to Claim 2 or one of the following, **characterized in that**
the length in the direction of the extruding press of the cheek plates (12, 13) in the pressing station (6) represents at least double the length of a pressing stroke of the product (16).

9. Extruding press according to Claim 2 or one of the following, **characterized in that**
there is a changeover control between the moving mould walls of the curing channel (5) and the cheek plates (12) of the pressing station (6) such that the cheek plates (12) are lifted if the moving mould walls are acting on the product (16).

10. Extruding press according to Claim 2 or one of the following, **characterized in that** the cheek plates (12) are heated and have holes (14, 15) for feeding steam.

## Revendications

1. Procédé d'extrusion de fragments végétaux, notamment en bois, mélangés à des liants dans une extrudeuse agissant principalement horizontalement, le mélange de fragments, après avoir été comprimé axialement dans une chambre (3) de compression, étant envoyé dans un canal (5) de durcissement qui peut être chauffé et dont les parois mobiles sont soutenues de manière modifiable en pression pendant l'arrêt du cordon,
**caractérisé en ce que** le cordon, en un état dans lequel il est déjà comprimé et déjà durci dans la partie extérieure, est post-formé radialement par une pression de déformation, partiellement pendant l'arrêt du cordon et est alimenté dans la zone de compression en vapeur d'eau, notamment en vapeur d'eau saturée, ou en gaz chaud.

2. Extrudeuse pour la mise en oeuvre du procédé suivant la revendication 1, constituée d'un puit (4) d'alimentation en une quantité de fragments, d'une chambre (3) de remplissage ou de compression y faisant suite, d'un piston (4) d'extrudeuse agissant d'une manière prépondérante horizontalement et d'un canal (5) de durcissement qui peut être chauffé et dans lequel passe, en vue du durcissement, le mélange de fragments comprimé dans la chambre de remplissage ou de compression, les parois mobiles du canal étant soutenues par endroits,
**caractérisée en ce que** dans la partie du canal (5) de durcissement est disposé un poste (6) de compression muni de mâchoires (12, 13) de compression pour le post-formage radial du cordon (16), ainsi qu'un poste (7) d'alimentation en vapeur pour l'introduction radiale en cadence de vapeur d'eau, notamment de vapeur d'eau saturée ou de gaz chaud.

3. Extrudeuse suivant la revendication 2,
**caractérisée en ce que** le poste d'alimentation en vapeur est réuni au poste (6) de compression en une unité de construction.

4. Extrudeuse suivant la revendication 3,
**caractérisée en ce qu'**il est prévu une commande des opérations successives par laquelle, lors de l'arrêt de l'avance du cordon, le post-formage du cordon (16) est effectué d'abord et ensuite l'alimentation en vapeur du cordon (16) est effectuée.

5. Extrudeuse suivant la revendication 2 ou l'une des suivantes,
**caractérisée en ce qu'**à la suite du poste (6) de compression, est prévue une zone (9) habituelle de post-durcissement d'une longueur courte.

6. Extrudeuse suivant la revendication 2 ou l'une des suivantes,
**caractérisée en ce qu'**à la suite du poste (6) de compression, est prévue une unité de freinage, pour régler le frottement du cordon et la densité apparente du cordon (16).

7. Extrudeuse suivant la revendication 2 ou l'une des suivantes,
**caractérisée en ce que** la pression de déformation est réglée de manière à obtenir un post-formage centré de tous côtés du cordon (16) de l'ordre de grandeur de 0,5 mm à 2 mm.

8. Extrudeuse suivant la revendication 2 ou l'une des suivantes,
**caractérisée en ce que** la longueur, s'étendant dans la direction d'extrusion, des mâchoires (12, 13) de compression se trouvant dans le poste (6) de compression correspond au moins à deux fois la longueur d'une déformation par compression du cordon (16).

9. Extrudeuse suivant la revendication 2 ou l'une des suivantes,
**caractérisée en ce qu'**il est prévu une commande alternée entre les parois mobiles de conformation du canal (5) de durcissement et les mâchoires (12) de compression du poste (6) de compression de façon à desserrer les mâchoires (12) de compression lorsque les parois mobiles de conformation agissent sur le cordon (16).

10. Extrudeuse suivant la revendication 2 ou l'une des suivantes,
**caractérisée en ce que** les mâchoires (12) de compression sont chauffées et sont munies d'un circuit (14, 15) pour l'alimentation en vapeur.
